# EUROPEAN PATENT SPECIFICATION

(11) **EP 2 446 150 B1**
(45) Date of publication and mention of the grant of the patent: **31.03.2021**
(21) Application number: 10792419.3
(22) Date of filing: 23.06.2010
(51) Int. Cl.: F15B 13/04, E02F 9/22

(54) **VALVE DEVICE**
VENTILVORRICHTUNG
DISPOSITIF DE SOUPAPE

(30) Priority: 24.06.2009 SE 0900866
(43) Date of publication of application: 02.05.2012
(73) Proprietor: Nordhydraulic AB, 872 24 Kramfors (SE)
(72) Inventor: ANDERSSON, Bo, 554 48 Jönköping (SE); LUNDGREN, Bertil, 872 96 Bjärtrå (SE)
(74) Representative: Bartels und Partner, Patentanwälte
(86) International application number: PCT/SE2010/050718
(87) International publication number: WO 2010/151218

(56) References cited:
- EP-A2- 0 607 108
- DE-A1- 3 436 246
- DE-A1- 3 436 246
- US-A- 4 981 159
- US-A- 5 203 678
- US-B2- 7 353 749

## Description

The invention relates to a valve device and specifically a valve device for use in a hydraulic system with the features according to the preamble of claim 1.

Hydraulic systems are used on mobile machines of different kinds in order to control the operation of the tools and functions of the mobile machines. In principle, there are two different types of valves for hydraulic control of such tools or functions; open-centre-valves and load sensing valves, which normally are denoted LS-valves.

Open-centre valves are mainly used in systems including a pump with a fixed displacement. The pump produces a constant flow and is often driven by a diesel motor with a predetermined constant rotational speed. When the valve that controls a tool is in a neutral position the hydraulic fluid passes through the "open centre" of the valve under low pressure back to the tank. If the valve is regulated in order to deliver a flow to a function, this will imply a simultaneous reduction of the flow through the open centre to a corresponding degree. The pump pressure used in open-centre valves is dependent of the load that has to be overcome in order to perform a desired function.

LS-valves on the other hand are mainly used in systems with pumps with a variable displacement. The displacement of the pump is continuously controlled by the valve system such that flows of desired magnitudes are attained to the different functions. As an alternative, the variable pump may be exchanged for a fixed pump and a so called load sensing bypass valve. Such a system involves a lower initial investment but higher operational costs due to greater energy losses. The invention is mainly intended for use in LS-systems.

### PRIOR ART

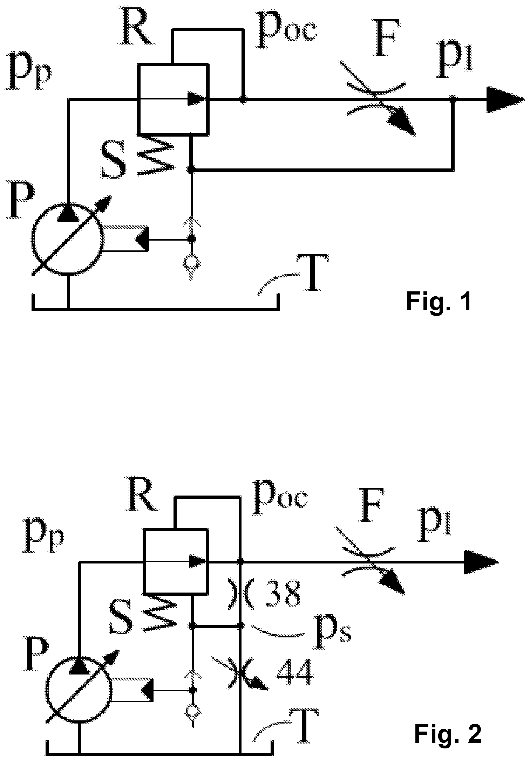

In figure 1 a conventional LS-valve is shown, which is provided with a pressure regulator R. A pressure regulator is normally used in hydraulic systems to achieve better control of all the functions, to which a pump P is arranged to deliver a flow. A first pressure Poc acts via a first control conduit on a first side of the pressure regulator R. A second pressure P₁ acts on the other side of the pressure regulator R and corresponds to the pressure in the motor port of the work tool to which the pump P is connected. A spring S is arranged to act on the same side of the pressure regulator (the lower side in figure 1), wherein the spring force may be said to correspond to a pressure ΔP. The pressure drop over the control valve or the flow regulating valve F will hence constantly be equal to ΔP.

This performance implies that the flow through the control valve for a certain lever control position will be just as important regardless of the load. A conventional load sensing valve delivers a flow to the consumer that in each moment is proportional to the size of the opening of the flow regulating valve F. This flow is delivered even if the consumer cannot take up the flow. This is e.g. the case when the load has a high inertia. In that case it takes a comparatively long time to alter the velocity of the load. If the valve delivers a flow that is greater than the load port is able to receive, the pressure will increase and in the ideal case the pressure will increase in a single step, i.e. very rapidly. In practice the pressure increases until a pressure relief valve (not shown) opens and limits the pressure to a predetermined maximum value. The rapidly increasing pressure makes the load accelerate maximally such that the velocity of the load will increase. An ideal load sensing system is not suited for loads with great inertia or for functions where it is preferable to control the pressure rather than the flow. The governing of inertial loads by means of a load sensing valve implies that the governing becomes abrupt, since the acceleration is either null or maximal.

In US 4 981 159, a pressure compensated LS-valve is described, in which a pressure regulator is utilized to continuously regulate a pressure difference in a different manner.

The pressure difference is the difference between the two pressures that act on opposing areas, wherein one of the areas is exposed to an additional force originating from a spring S. Hence, in principle, the difference in pressure corresponds to the force of the spring converted into to pressure, i.e. ΔP. The fact that the pressure regulator R is regulated in such a manner that a substantially constant pressure difference arises independent of the flow through the valve may then be used in different manners, e.g. in order to achieve a flow regulation.

In the conventional LS-valve that is shown in figure 1, this characteristic of the pressure regulator R is utilized to obtain a constant pressure drop over the inlet restrictor of the flow regulating valve. In US 4 981 159, which is schematically represented in figure 2, this characteristic is instead utilized to achieve a constant flow through a restrictor 38. The restrictor 38 is typically very small in comparison to the restrictor of the flow regulating valve F, in the magnitude of a couple of percent. The regulated flow in figure 2 is hence substantially smaller than the maximum regulated flow in figure 1. The regulated flow in figure 1 is utilized to obtain an accurate velocity control of the load connected to the valve. The substantially smaller flow in figure 2 is instead utilized to control the pressure of the pressure regulator by controlling the size of the restrictor 44 by means of the operator's lever control.

When the valve's lever control is in a neutral position the restrictor 44 is maximally open. The constant flow through the restrictor 38 may then pass the variable restrictor 44 at a low pressure drop. Hence, the pressure signal to the pressure regulator R corresponds to a low pressure. The pressure regulator R must therefore regulate its outlet pressure to a pressure that corresponds to that of the spring force. This pressure is normally in the range of 5-10 Bar. When the operator manoeuvres the valve, the variable restrictor 44 will be continuously closed as a function of the lever position. Therefore, the constant flow through the restrictor 38 will meet a greater resistance as it passes through the restrictor 44 to the tank T, and consequently the pressure Ps in the signal conduit will increase. In correspondence, the regulated pressure of the pressure regulator will increase. The regulated pressure will become Ps plus the pressure ΔP that corresponds to the spring force. The regulated pressure will hence in principle be fully independent of the flow that passes through the inlet restrictor to the load.

The relatively insignificant alteration from figure 1 to figure 2 implies that the flow regulating valve has obtained totally reversed properties. Instead of controlling the flow towards the load, the regulation has altered diametrically such that instead the pressure upstream of the inlet restrictor is controlled.

Both of the different valve devices are advantageous in specific, but different conditions and substantially less advantageous in other conditions. It is hence interesting to combine these properties depending on the actual conditions.

US 7 353 749 describes a system, in which it in principle is possible to shift between the two systems in dependence of the actual conditions. The system is however relatively complicated and does not provide a fully satisfactory solution.

There is hence a need of a valve device that is relatively uncomplicated in its arrangement and that makes it possible to control a hydraulic system in a flexible manner in dependence of the actual conditions.

DE 34 36 246 A1 discloses a hydraulic valve device including a high pressure connection and a low pressure connection; at least one motor port connection which is connectable to a motor port on a hydraulic motor, preferably a hydraulic cylinder; a flow regulating valve, which is arranged between the high pressure connection and the motor port connection and which includes a first flow opening that is adjustable between a fully closed position and a fully open position; a pressure regulator, which is arranged between the high pressure connection and the flow regulating valve, wherein a regulator pressure acting at a first connection point between the pressure regulator and the flow regulating valve via a first control conduit acts on the pressure regulator in order to close the same, wherein a second control conduit including a first restrictor, which control conduit is arranged to convey a load pressure that acts at the motor port connection from a second connection point positioned between the flow regulating valve and the motor port connection via the first restrictor to a third connection point where a first control pressure acts and which third connection point is in connection with the pressure regulator in order to act on the same in the opening direction with said first control pressure, wherein the third connection point is connected to the low pressure connection, via an adjustable second restrictor, and wherein a third control conduit including a third restrictor is arranged in order to convey the regulator pressure acting at the first connection point between the pressure regulator and the flow regulating valve via the third restrictor to said third connection point, wherein, in a first open position of the flow regulating valve, in which a valve spool is displaced, the flow regulating valve is gradually opened, so that hydraulic fluid may flow via the first flow opening, which is provided on the valve spool and which connects both the outlet of the pressure regulator and the first connection point to the second connection point, wherein a non-return valve is arranged between the second connection point (7) and the third connection point, which first non-return valve opens towards the second connection point in order to convey a flow in parallel with the flow regulating valve when the control pressure at the third connection point is greater than the load pressure at the second connection point. US 5 203 678 and EP 0 607 108 A2 disclose additional hydraulic valve devices.

### SHORT DESCRIPTION OF THE INVENTION

An object of the invention is to provide a valve device with relatively few included components that is able to control a flow in a hydraulic system in a flexible manner.

This object is achieved by means of the valve device according to claim 1.

According to the characterizing portion of claim 1, from the second connection point, a flow may flow past a non-return valve as soon as the pressure in the second connection point exceeds a load pressure, which acts at the motor port connection.

The hydraulic valve device includes a high pressure connection and a low pressure connection; at least one motor port connection that is connectable to a motor port on a hydraulic motor, preferably a hydraulic cylinder; a flow regulating valve, which is arranged between the high pressure connection and the motor port connection and which includes a flow opening that is adjustable between a fully closed position and a fully open position; and a pressure regulator that is arranged between the high pressure connection and the flow regulating valve, wherein a regulator pressure acting at a first connection point between the pressure regulator and the flow regulating valve via a first control conduit acts on the pressure regulator in order to close the same. A second control conduit, including a first restrictor, is arranged to convey a load pressure that acts at the motor port connection from a second connection point positioned between the flow regulating valve and the motor port connection via the first restrictor to a third connection point where a first control pressure acts and which third connection point is in connection with the pressure regulator in order to act on the same in the opening direction by means of said first control pressure, wherein the third connection point is connected to the low pressure connection, via an adjustable second restrictor.

Advantageous embodiments of the invention are described in the detailed description and in the dependent claims.

### SHORT DESCRIPTION OF THE DRAWINGS

Fig. 1 shows a conventional LS-valve according to the description above;
Fig. 2 shows a conventional LS-valve for pressure control according to the description above;
Fig. 3 shows a diagram of a valve device according to a first variant, not according to the invention;
Fig. 4 shows a section of a specific embodiment of a valve device according to the first variant;
Fig. 5 shows a diagram of the specific embodiment that is shown in figure 4;
Fig. 6 shows a diagram of a valve device according to the invention;
Fig. 7 shows a section of a specific embodiment a valve device according to the invention;
Fig. 8 shows a diagram of the specific embodiment that is shown in figure 7.

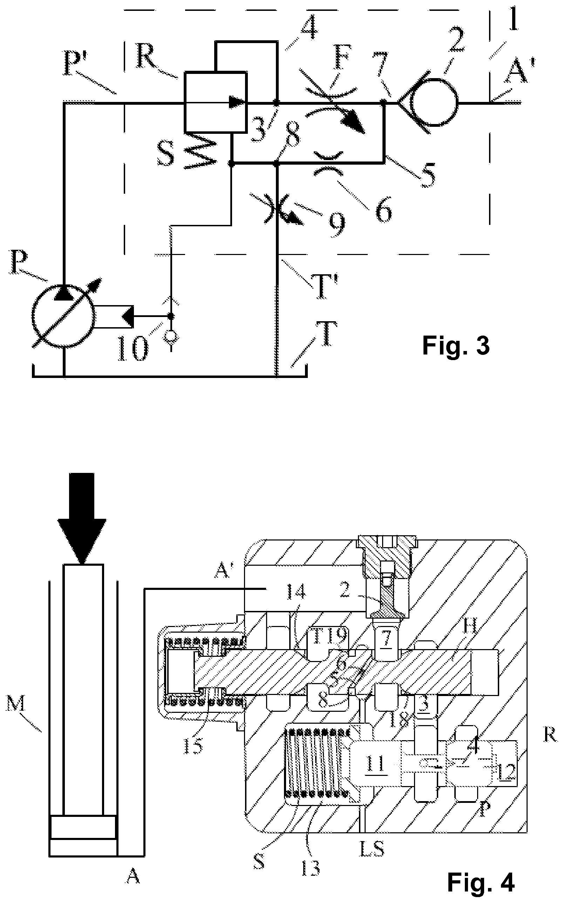

The embodiments of Fig. 3 to 5 serve the purpose of explaining the background of the invention, only. They are not the subject matter of any claim.

### DETAILED DESCRIPTION OF THE SHOWN EMBODIMENTS

Figure 3 illustrates a simplified diagram of a first embodiment of a valve device, not according to the invention. The valve device 1 includes a high pressure connection P', which is connected to a pressure source in form of a pump P, preferably a pump with a variable displacement. Further, the valve device 1 includes a low pressure connection T', which is connected to a low pressure tank T.

At the other end of the valve device 1 a motor port connection A' is arranged, which is connectable to a motor port A on a hydraulic motor M, which in the shown embodiment is illustrated by a single acting hydraulic cylinder (see figure 4). The invention is however not limited to the use of single acting hydraulic cylinders, but may on the contrary be advantageously used on other types of hydraulic motors such as e.g. double acting hydraulic cylinders, shaft driving motors, or the like.

A flow regulating valve F is arranged between the high pressure connection P' and the motor port connection A', in order to regulate the flow towards the motor port connection A'. For this purpose the flow regulating valve F includes a flow opening that is adjustable between a fully closed position and a fully open position. The flow over the flow regulating valve F is proportional to the size of the flow opening but is also dependent of the pressure drop over the flow regulating valve, why the flow is dependent of the pressure both upstream and downstream of the flow regulating valve F. Preferably, a first non-return valve 2 is arranged upstream of the flow regulating valve F in order to prevent flow in the wrong direction, i.e. in the opposite direction to the pump flow. However, as alternatives, a non-return valve 20 may be placed at other locations.

A pressure regulator R is arranged between the high pressure connection P' and the flow regulating valve F in order to regulate the pressure downstream of the flow regulating valve F, which pressure is denoted regulator pressure P_{R} and acts at a first connection point 3 located between the pressure regulator R and the flow regulating valve F. A first control conduit 4 is arranged to convey the regulator pressure P_{R} to the pressure regulator R and to act on the same in the closing direction. Preferably, there is also a spring S arranged, which acts constantly on the pressure regulator R in the opening direction.

A second control conduit 5, which includes a first restrictor 6, is positioned between the flow regulating valve F and the motor port connection A'. The second control conduit 5 is arranged to convey the load pressure P_{L}, which acts at the motor port connection A', from a second connection point 7 via the first the restrictor 6 to a third connection point 8, where a first control pressure Pc acts. The first restrictor 6 may advantageously be fixed and independent of the regulation of the flow regulating valve F.

The third connection point 8 is also connected to the pressure regulator R and acts on the same in the opening direction by means of said first control pressure Pc and further, the third connection point 8 is connected to the low pressure connection T', via a second restrictor 9. The second restrictor 9 is preferably adjustably arranged, e.g. such that it is regulated in dependence of the flow regulating valve F and possibly the adjustable second restrictor 9 may be such arranged that the flow through area of the second restrictor 9 decreases when the flow through area of the opening of the flow regulating valve F towards the motor port connection A' increases.

The third connection point 8 is also in connection with a shuttle valve 10, which also receives the control pressure from other valve devices and conveys a control pressure to the pump P. The shuttle valve 10 is in a known manner arranged to convey the highest of the incoming control pressures to the pump P, such that the application that for the moment demands the highest pressure governs the pressure of the pump P.

Preferably, the second restrictor 9 may be such arranged that it is fully open when the flow regulating valve F is closed or just barely open, wherein it for a certain position of the flow regulating valve closes, such that it constitutes a restrictor that is continuously decreased as the flow regulating valve continuously opens. Such a performance implies that when the flow regulating valve F is opened to a low degree, the flow downstream will pass via the first restrictor 6 and the second restrictor 9 rather than to the motor port connection A', unless the pressure at the motor port connection A' is very low.

The adjustable second restrictor 9 may advantageously be arranged to be electrically regulated. In this manner it is namely possible to customize the valve device 1 and its controls without having to adapt the production for each individual valve. This is due to the fact that the properties of the valve device to a great extent is actually controlled by the characteristics of the second restrictor 9. The different properties may be adapted to the specific application at which the valve device 1 is to be used, but also to special requirements of a specific operator. Further, it is possible through software programming alone to change the properties of an already installed valve device. Hence, the usefulness of the valve device is ameliorated in that e.g. the valve device may be used in several different applications and that it may be adapted in a simple manner to several different special requirements of different specific operators.

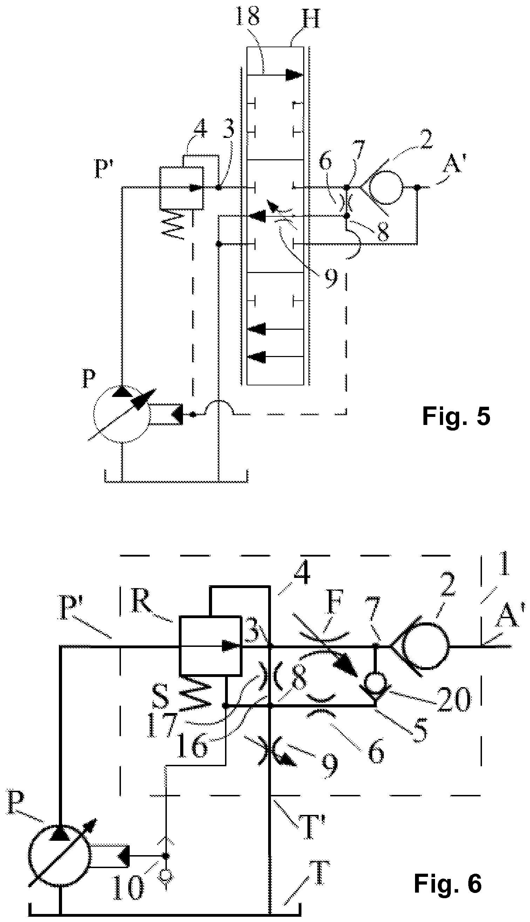

A first embodiment of the valve device 1 according to the diagram in figure 3 is shown in the longitudinal section in figure 4 and in figure 5 an alternative diagram for the same embodiment is shown. In figure 4 and 5 the flow regulating valve F constitutes a part of a control valve with a valve spool H. The valve spool H is adjustable between three positions; a first closed position, which is shown in the figures and in which the flow from the high pressure connection P' is kept closed by the valve spool H, and two open positions. In the first open position, in which the valve spool H has been displaced to the right in figure 4 and downwards in figure 5, the flow regulating valve will open gradually and the hydraulic fluid may flow via a first flow opening 18, which is provided on the valve spool H and which connects both the outlet of the pressure regulator R and the first connection point 3 to the second connection point 7, from which a flow may flow past the non-return valve 2 as soon as the pressure in the second connection point 7 exceeds the load pressure P_{L}, which acts at the motor port connection A'. The first flow opening 18 mainly corresponds to the flow regulating valve F in figure 3.

Further, the second connection point 7 is in connection with a third connection point 8, via the first the restrictor 6. The adjustable second restrictor 9 is in the embodiment shown in figure 4 constituted by a second flow opening 19, of which the flow through area decreases gradually as the flow regulating valve F opens via the first flow opening 18 and as the valve spool H is displaced to the right.

In the shown embodiment, the pressure regulator R has a regulator spool 11 that is located in a valve body with three separate chambers: a right chamber 12, which is in control connection via the control conduit 4 with the first connection point 3; which connection point 3 constitutes a central chamber; and a left chamber 13, in which a spring S is arranged, which in conjunction with the pressure P_{C} in the left chamber acts in the opening direction on the regulator spool 11, i.e. towards the right in figure 4.

A difference with respect to the diagram in figure 3 is that in figure 4 and 5 it is illustrated how the cylinder chamber is emptied via the motor port A. When the valve spool is regulated towards the second open position, i.e. to the left in figure 4 and upwards in figure 5, diversion recesses 14 will connect the motor port connection A' to the low pressure connection T'. The more the valve spool H is displaced towards the second open position, the greater the flow opening through the diversion recesses 14 becomes.

To the left of the valve spool H in figure 4, a double acting spring arrangement 15 is arranged, which acts to keep the valve spool H in the closed central position shown in figure 4.

In figures 6-8, a valve device according to the invention is shown in a corresponding manner as the first valve device has been shown in the figures 3-5. The alternative valve device differs in two features only, with respect to the first embodiment of the valve device, whereas mainly these features will be covered in the following description.

The first difference consists in that a third control conduit 16 including a third restrictor 17 is arranged to convey the regulator pressure P_{R} that acts in the first connection point 3 between the pressure regulator R and the flow regulating valve F to the third connection point 8.

The second difference consists in that a second non-return valve 20 is arranged in the second control conduit 5 in order to prevent a flow from the outlet of the flow regulating valve F to the third connection point 8, via the second connection point 7. Hence, the second non-return valve 20 opens towards the second connection point 7 and conveys a flow in parallel with the flow regulating valve F when the control pressure Pc at the third connection point 8 is greater than the load pressure P_{L} at the second connection point 7.

This gives advantages in systems with great inertia, such as e.g. when a swinging arm or crane beam is to be moved. When the flow regulating valve F opens in order to let through a flow it will in a conventional valve device initially take a very high pressure to overcome the inertia of the crane beam and make it move. However, as the crane beam works up a velocity the necessary pressure will decrease. The control pressure that is conveyed to the pump will in a conventional system however remains elevated due to the fact that the flow that the pump delivers is much greater than that the cylinder chamber may receive. Hence, a flow will go under a very high pressure to the tank, which flow corresponds to an energy loss. In the invention according to the second embodiment, a flow will instead go from the first connection point 3, via the third and second connection points 8 and 7, respectively, to the motor port connection A', with very low pressure losses as a consequence. At the same time a lower pressure Pc will be conveyed to the pressure regulator R and the pump P, which hence may operate at a lower pressure level.

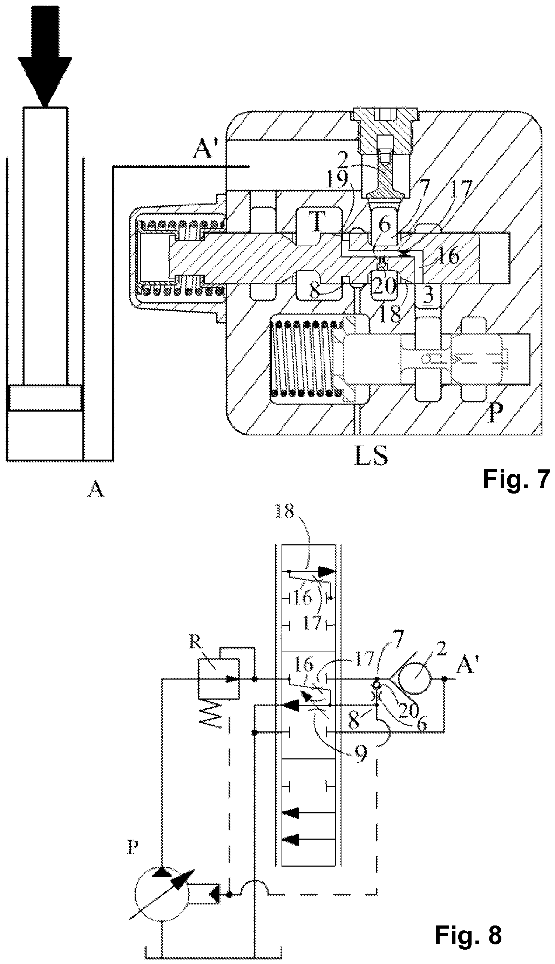

In figure 7, an alternative embodiment of the valve device 1 is shown, in which the third control conduit 16 consists of a through hole that connects the first connection point 3 with the third connection point 8. Centrally on the third control conduit 16 a connection to the second control conduit 6 is provided, which includes a second non-return valve 20 that opens towards the second connection point 7. Hence, with respect to the diagram in figure 6 there is a difference, but with respect to the strict functionality there is no difference.

The connection point 8, which in figure 6 is illustrated by a dot, may in figure 7 instead be said to be constituted by the part of the third control conduit 16 that is located downstream of the third restrictor 17 and is in connection with the first restrictor 6. Generally, the shown diagrams are simplifications that only show parts that are relevant for the invention and above all, the connection points are theoretical points that in practice may be constituted by a part of a conduit or the like.

In figure 8, a second diagram of the alternative valve device 1 is shown. The difference in this diagram with respect to the diagram that is shown in figure 5 is hence the same as the differences between figures 7 and 4, i.e. the third control conduit 16 that includes a third restrictor 17 and a second non-return valve 20. The third control conduit 16 is not represented in the second open position, i.e. when the valve spool has been displaced upwards, since in this position it is without function.

## Claims

1. A hydraulic valve device (1) including:
- a high pressure connection (P') and a low pressure connection (T');
- at least one motor port connection (A') which is connectable to a motor port (A) on a hydraulic motor (M), preferably a hydraulic cylinder;
- a flow regulating valve (F), which is arranged between the high pressure connection (P') and the motor port connection (A') and which includes a flow opening (18) that is adjustable between a fully closed position and a fully open position; and
- a pressure regulator (R), which is arranged between the high pressure connection (P') and the flow regulating valve (F), wherein a regulator pressure (P_{R}) acting at a first connection point (3) between the pressure regulator (R) and the flow regulating valve (F) via a first control conduit (4) acts on the pressure regulator (R) in order to close the same,
wherein a second control conduit (5) including a first restrictor (6) is provided, which second control conduit (5) is arranged between a second connection point (7) positioned between the flow regulating valve (F) and the motor port connection (A') and a third connection point (8) wherein a first control pressure (P_{C}) acts at the third connection point (8) and which third connection point (8) is in connection with the pressure regulator (R) in order to act on the same in the opening direction with said first control pressure (Pc), wherein the third connection point (8) is connected to the low pressure connection (T), via an adjustable second restrictor (9), and wherein a third control conduit (16) including a third restrictor (17) is arranged in order to convey the regulator pressure (PR) acting at the first connection point (3) between the pressure regulator (R) and the flow regulating valve (F) via the third restrictor (17) to said third connection point (8), wherein, in a first open position of the flow regulating valve (F), in which a valve spool (H) is displaced, the flow regulating valve (F) is gradually opened, so that hydraulic fluid may flow via the flow opening (18), which is provided on the valve spool (H) and which connects both the outlet of the pressure regulator (R) and the first connection point (3) to the second connection point (7), wherein a first non-return valve (20) is arranged between the second connection point (7) and the third connection point (8), which first non-return valve (20) opens towards the second connection point (7) in order to convey a flow in parallel with the flow regulating valve (F) when the control pressure (P_{C}) at the third connection point (8) is greater than the load pressure (P_{L}) at the second connection point (7), **characterized in that**, from the second connection point (7), a flow may flow past a second non-return valve (2) as soon as the pressure in the second connection point (7) exceeds a load pressure (P_{L}), which acts at the motor port connection (A').

2. Hydraulic valve device (1) according to any of the preceding claims, **characterised in that** the adjustable second restrictor (9) is regulated in dependence of the flow regulating valve (F).

3. Hydraulic valve device (1) according to claim 2, **characterised in that** the adjustable second restrictor (9) is regulated such that the flow through area of said restrictor (9) decreases when the flow through area of the opening of the flow regulating valve (F) towards the motor port connection (A') is increased.

4. Hydraulic valve device (1) according to any of the preceding claims, **characterised in that** the adjustable second restrictor (9) is arranged to be electrically regulated.

5. Hydraulic valve device (1) according to any of the preceding claims, **characterised in that** a spring (S) is arranged to constantly act on the pressure regulator (R) in order to open the same.

## Patentansprüche

1. Eine hydraulische Ventilvorrichtung (1) mit:
- einem Hochdruckanschluss (P') und einem Niederdruckanschluss (T');
- mindestens einem Motoranschluss (A'), der an einen Motoranschluss (A) an einem Hydraulikmotor (M), vorzugsweise einem Hydraulikzylinder, angeschlossen werden kann;
- einem Stromregelventil (F), das zwischen dem Hochdruckanschluss (P') und dem Motoranschluss (A') angeordnet ist und das eine Durchflussöffnung (18) aufweist, die zwischen einer vollständig geschlossenen Position und einer vollständig geöffneten Position einstellbar ist; und
- einem Druckregler (R), der zwischen dem Hochdruckanschluss (P') und dem Stromregelventil (F) angeordnet ist, wobei ein an einer ersten Verbindungsstelle (3) zwischen dem Druckregler (R) und dem Stromregelventil (F) wirkender Regeldruck (P_{R}) über eine erste Steuerleitung (4) auf den Druckregler (R) einwirkt, so dass dieser geschlossen wird,
wobei eine zweite Steuerleitung (5) mit einer ersten Drossel (6) vorgesehen ist und die zweite Steuerleitung (5) zwischen einer zweiten Verbindungsstelle (7), die zwischen dem Stromregelventil (F) und dem Motoranschluss (A') liegt, und einer dritten Verbindungsstelle (8) angeordnet ist, wobei ein erster Steuerdruck (P_{C}) an der dritten Verbindungsstelle (8) anliegt und die dritte Verbindungsstelle (8) mit dem Druckregler (R) in Verbindung steht, so dass dieser in Öffnungsrichtung mit dem ersten Steuerdruck (P_{c}) beaufschlagt wird, wobei die dritte Verbindungsstelle (8) über eine einstellbare zweite Drossel (9) mit dem Niederdruckanschluss (T') verbunden ist, und wobei eine dritte Steuerleitung (16) mit einer dritten Drossel (17) so angeordnet ist, dass der an der ersten Verbindungsstelle (3) anliegende Reglerdruck (PR) zwischen dem Druckregler (R) und dem Stromregelventil (F) über die dritte Drossel (17) zur dritten Verbindungsstelle (8) geführt wird, wobei in einer ersten Offenstellung des Stromregelventils (F), in die ein Steuerschieber (H) verschoben ist, das Stromregelventil (F) allmählich geöffnet wird, so dass Hydraulikflüssigkeit über die am Steuerschieber (H) vorgesehene Durchflussöffnung (18) fließen kann, die sowohl den Ausgang des Druckreglers (R) als auch die erste Verbindungsstelle (3) mit der zweiten Verbindungsstelle (7) verbindet, wobei zwischen der zweiten Verbindungsstelle (7) und der dritten Verbindungsstelle (8) ein erstes Rückschlagventil (20) angeordnet ist, das zu der zweiten Verbindungsstelle (7) hin öffnet, damit parallel zum Stromregelventil (F) ein Fluss fließt, wenn der Steuerdruck (P_{C}) an der dritten Verbindungsstelle (8) größer ist als der Lastdruck (P_{L}) an der zweiten Verbindungsstelle (7), **dadurch gekennzeichnet, dass** von der zweiten Verbindungsstelle (7) aus ein Fluss durch ein zweites Rückschlagventil (2) fließen kann, sobald der Druck an der zweiten Verbindungsstelle (7) einen Lastdruck (P_{L}), der am Motoranschluss (A') anliegt, übersteigt.

2. Hydraulische Ventileinrichtung (1) nach einem der vorhergehenden Ansprüche, **dadurch gekennzeichnet, dass** die einstellbare zweite Drossel (9) in Abhängigkeit vom Stromregelventil (F) geregelt wird.

3. Hydraulische Ventilvorrichtung (1) nach Anspruch 2, **dadurch gekennzeichnet, dass** die einstellbare zweite Drossel (9) so geregelt ist, dass die Durchflussfläche der Drossel (9) abnimmt, wenn die Durchflussfläche der Öffnung des Stromregelventils (F) zum Motoranschluss (A') hin vergrößert wird.

4. Hydraulische Ventileinrichtung (1) nach einem der vorhergehenden Ansprüche, **dadurch gekennzeichnet, dass** die einstellbare zweite Drossel (9) elektrisch regelbar ausgebildet ist.

5. Hydraulische Ventilvorrichtung (1) nach einem der vorhergehenden Ansprüche, **dadurch gekennzeichnet, dass** eine Feder (S) so angeordnet ist, dass diese beständig auf den Druckregler (R) wirkt zum Öffnen desselben.

## Revendications

1. Dispositif (1) de soupape hydraulique comprenant :
- un raccord (P') de haute pression et un raccord (T') de basse pression ;
- au moins un premier raccord (A') d'orifice de moteur, qui peut être mis en communication avec un orifice (A) de moteur sur un moteur (M) hydraulique, de préférence un vérin hydraulique ;
- une soupape (F) de régulation de débit, qui est montée entre le raccord (P') de haute pression et le raccord (A') d'orifice du moteur et qui a une ouverture (18) d'écoulement réglable entre une position entièrement fermée et une position entièrement ouverte ;
- un régulateur (R) de pression, qui est monté entre le raccord (P') de haute pression et la soupape (F) de régulation du débit, une pression (Pᵣ) du régulateur s'appliquant à un premier point (3) de raccordement entre le régulateur (R) de pression et la soupape (F) de régulation de débit, par l'intermédiaire d'un premier conduit (4) de commande s'appliquant au régulateur (R) de la pression afin de le fermer,
dans lequel il est prévu un deuxième conduit (5) de commande ayant un premier étrangleur (6), lequel le deuxième conduit (5) de commande est monté entre un deuxième point (7) de raccordement placé entre la soupape (F) de régulation du débit et le raccord (A') de l'orifice du moteur et un troisième point (8) de raccordement, dans lequel une première pression (P_{c}) de commande s'applique au troisième point (8) de raccordement et ce troisième point (8) de raccordement est en communication avec le régulateur (P) de la pression afin d'agir sur celui-ci dans le sens de l'ouverture par ladite pression (P_{c}) de commande, dans lequel le troisième point (8) de raccordement communique avec le raccord (T) de basse pression, par l'intermédiaire d'un deuxième étrangleur (9) réglable, et dans lequel un troisième conduit (16) de commande, ayant un troisième étrangleur (17), est monté afin d'acheminer la pression (PR) du régulateur s'appliquant au premier point (3) de raccordement entre le régulateur (R) de la pression et la soupape (F) de régulation du débit, par l'intermédiaire du troisième étrangleur (17) audit troisième point (8) de raccordement dans lequel, dans une première position ouverte de la soupape (F) de régulation du débit, dans laquelle un distributeur (H) à tiroir est déplacé, la soupape (F) de régulation du débit est ouverte graduellement, de sorte que du fluide hydraulique peut aller, par l'intermédiaire de l'ouverture (18) d'écoulement, qui est prévue sur le distributeur (H) à tiroir et qui met en communication à la fois la sortie de régulateur (R) de la pression et le premier point de raccordement, au deuxième point (7) de raccordement, dans lequel un premier clapet (20) de non retour est monté entre le deuxième point (7) de raccordement et le troisième point (8) de raccordement, lequel premier clapet (20) de non retour s'ouvre vers le deuxième point (7) de raccordement, afin d'acheminer un écoulement en parallèle avec la soupape (F) de régulation du débit lorsque la pression (P_{c}) de commande au troisième point (8) de raccordement est plus grande que la pression (P_{L}) de charge au deuxième point (7) de raccordement, **caractérisé en ce que**, à partir du deuxième point (7) de raccordement, un écoulement peut passer au-delà du deuxième clapet (2) de non retour, dès que la pression au deuxième point (7) de raccordement dépasse une pression (P_{L}) de charge, qui s'applique au raccord (A') de l'orifice du moteur.

2. Dispositif (1) de soupape hydraulique suivant l'une quelconque des revendications précédentes, **caractérisé en ce que** le deuxième étrangleur (9) réglable est régulé en fonction de la soupape (F) de régulation du débit.

3. Dispositif (1) de soupape hydraulique suivant la revendication 2, **caractérisé en ce que** le deuxième étrangleur (9) réglable est régulé, de manière à ce que l'écoulement dans une surface de l'étrangleur (9) diminue lorsqu'est augmenté l'écoulement dans une surface de l'ouverture de la soupape (F) de régulation du débit, vers le raccord (A') de l'orifice du moteur.

4. Dispositif (1) de soupape hydraulique suivant l'une quelconque des revendications précédentes, **caractérisé en ce que** le deuxième étrangleur (9) réglable est agencé pour être régulé électriquement.

5. Dispositif (1) de soupape hydraulique suivant l'une quelconque des revendications précédentes, **caractérisé en ce qu'**un ressort (S) est agencé pour agir constamment sur le régulateur (R) de la pression, afin de l'ouvrir.
